**Europäisches Patentamt**

**European Patent Office**

**Office européen des brevets**

(19)

(11) Veröffentlichungsnummer : **0 277 124 B1**

(12) **EUROPÄISCHE PATENTSCHRIFT**

(45) Veröffentlichungstag der Patentschrift :
06.03.91 Patentblatt 91/10

(51) Int. Cl.⁵ : **G01J 5/20**

(21) Anmeldenummer : **86905733.1**

(22) Anmeldetag : **03.10.86**

(86) Internationale Anmeldenummer :
**PCT/DE86/00402**

(87) Internationale Veröffentlichungsnummer :
**WO 87/02456 23.04.87 Gazette 87/09**

(54) **WÄRMESTRAHLUNGSSENSOR.**

(30) Priorität : 10.10.85 DE 3536133

(43) Veröffentlichungstag der Anmeldung :
10.08.88 Patentblatt 88/32

(45) Bekanntmachung des Hinweises auf die
Patenterteilung :
06.03.91 Patentblatt 91/10

(84) Benannte Vertragsstaaten :
**DE FR GB IT**

(56) Entgegenhaltungen :
**CH-A- 553 974**
**US-A- 3 355 589**
**US-A- 3 745 360**
**US-A- 4 463 262**
**Patent Abstracts of Japan, vol. 4, Nr. 62,**
**(P-10)(544) 9 May 1980 & JP-A-55-31977**

(73) Patentinhaber : **ROBERT BOSCH GMBH**
**Postfach 50**
**W-7000 Stuttgart 1 (DE)**

(72) Erfinder : **FEDTER, Horst**
**Wiedenbachweg 14**
**W-7582 Bühlertal (DE)**
Erfinder : **GRÜNWALD, Werner**
**Robert Schumanstr. 21**
**W-7016 Gerlingen (DE)**
Erfinder : **NOLTING, Peter**
**Scheffelweg 24**
**W-7582 Bühlertal (DE)**
Erfinder : **DE LA PRIETA, Claudio**
**Schwarzwaldstr. 81**
**W-7000 Stuttgart 80 (DE)**
Erfinder : **SCHMID, Kurt**
**Schlosstr. 55**
**W-7257 Ditzingen-Schöckingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Wärmestrahlungssensor nach der Gattung des Anspruchs 1. Es ist bereits ein derartiger Sensor beschrieben worden (siehe bspw. US-A-3 355 589), bei dem zwei Empfängerflächen aus Kupferblech der Wärmestrahlung ausgesetzt werden, wobei jedes Empfängerblech auf der Rückseite einen aufgeklebten Temperaturfühler aufweist, so daß mit diesem Sensor direkt die unterschiedlichen Temperaturen gemessen werden, die dadurch auftreten, daß eines der Empfängerbleche geschwärzt und das andere vergoldet ist. Das Ganze ist in einem Gehäuse aus Messing untergebracht. Aufgrund des verhältnismäßig komplizierten Aufbaus ist ein solcher Sensor nicht für eine große Serie geeignet, wie dies beispielsweise bei einem Sensor, der in einem Kraftfahrzeug im Zusammenhang mit einer Klimaanlage eingesetzt werden soll, der Fall ist.

### Vorteile der Erfindung

Der erfindungsgemäße Wärmestrahlungssensor mit den kennzeichnenden Merkmalen des Anspruchs 1 at demgegenüber den Vorteil, daß er einfach herzustellen ist und sich daher auch für große Serien eignet und dabei doch mechanisch sehr stabil ist. Er ist darüber hinaus klein und leicht und kann daher an jeder erforderlichen Stelle, beispielsweise durch Kleben, befestigt werden. Die Anordnung liefert ein einziges Meßsignal, das in einfacher Weise beispielsweise zum Steuern einer Jalousie verwendet werden kann.

Durch die in den Unteransprüchen aufgeführten Maßnahmen sind vorteilhafte Weiterbildungen und Verbesserungen des im Hauptanspruch angegebenen Wärmestrahlungssensors möglich. Besonders vorteilhaft ist es, wenn die wärmestrahlungsdurchlässige Abdeckung aus einem Polyimid, z. B. aus einer Kapton-Folie besteht, die einseitig durch Aufbringen von Goldresinat und anschließende Wärmebehandlung bei 300 bis -350°C mit einer dünnen Goldschicht versehen wird. Sorgt man dafür, daß das Keramiksubstrat, auf dem sich die Widerstände befinden, derart in dem Rahmen fixiert ist, daß nur der Rand des Substrates auf einem entsprechenden Vorsprung des Rahmens aufliegt und der übrige Teil des Substrates frei liegt, dann wird eine minimale effektive Wärmekapazität bei guter mechanischer Stabilisierung des Substrates erreicht.

### Zeichnung

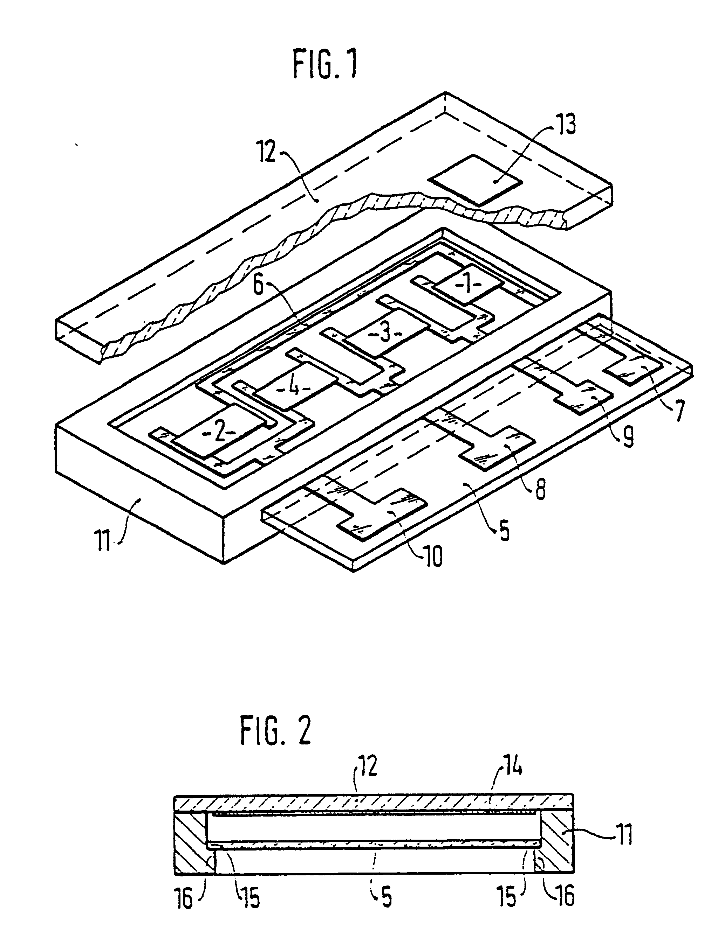

Ein Ausführungsbeispiel der Erfindung ist in der Zeichnung dargestellt und in der nachfolgenden Beschreibung näher erläutert. Es zeigen Figur 1 eine perspektivische Darstellung des Wärmestrahlungssensors und Figur 2 einen Schnitt durch denselben.

### Beschreibung des Ausführungsbeispiels

Der Wärmestrahlungssensor besteht aus einem Rahmen 11 aus duroplastischem Kunststoff, in welchem sich das Keramiksubstrat 5 befindet, das zwei strahlungsempfindliche Widerstände 1 und 2 sowie zwei temperaturunempfindliche Widerstände 3 und 4 aufweist, die in Form einer Brückenschaltung über die Leiterbahnen 6 miteinander verbunden sind. Ein Teil des Keramiksubstrats ragt aus dem Rahmen 11 heraus und bildet mit den Leiterbahnenden 7, 8, 9 und 10 den Anschluß des Sensors. Innerhalb des Rahmens 11 liegt das Keramiksubstrat, wie in Figur 2 gezeigt ist, nur mit dem Rand 15 auf einem entsprechenden Vorsprung 16 des Rahmens 11 auf, so daß der größte Teil des Keramiksubstrats 5 keinen direkten Kontakt mit dem Rahmen 11 hat. Auf dem Rahmen 11 befindet sich in einem Abstand von ca. 1 mm vom Keramiksubstrat 5 eine Abdeckung 12, die insgesamt wärmestrahlungsdurchlässig ist und auf der Rückseite eine Schicht aus einem Edelmetall trägt, wobei diese Schicht über dem strahlungsabhängigen Widerstand 1 ein Fenster 13 aufweist. Hierdurch wird erreicht, daß der Widerstand 1, der zudem noch eine schwarze Lackschicht trägt, Cer Wärmestrahlung ausgesetzt ist, während dies durch die reflektierende Edelmetallschicht 14 für den zweiten strahlungsabhängigen Widerstand 2 nicht gilt. Die Abdeckung 12 kann entweder aus einem IR-durchlässigen Glas, z. B. Robax-Glas der Firma Schott, oder aus einer Polyimidfolie, z. B. Kapton der Firma Dupont, bestehen.

Zur Herstellung des Wärmestrahlungssensors wird zunächst auf ein dünnes Keramikplättchen, vorzugsweise aus Aluminiumoxid, das Leiterbahnenmuster 6 mit den Anschlüssen 7, 8, 9 und 10 aufgedruckt. Es folgt dann das Aufdrucken der NTC-Widerstände 1 und 2, wobei ein Material in Form einer Paste verwendet wird, das Widerstände ergibt, die einen Quadratwiderstand von 5 kΩ □ und eine Regelkonstante B von 2200 ergeben. Hierzu eignet sich zum Beispiel die Widerstandspaste NTC 135 der Firma Heraeus. Danach werden noch die temperaturunabhängigen widerstände 3 und 4 in der gleichen Weise aufgebracht, wobei ein Cermetmaterial verwendet wird, das einen Quadratwiderstand von 10 KΩ □ ergibt, z. B. von der Firma Dupont das Material mit der Nr. 1441. Diese Widerstandsmaterialien werden in einer solchen Dicke auf den Keramiksubstrat aufgebracht, daß nach dem Einbrennen bei 850°C in Luft eine Schichtdicke von 8 µm verbleibt. Diese Brückenschaltung wird nun mittels eines Lasers, vorzugsweise an den Cermetwiderständen 3 und 4, abgeglichen, so daß die Brücke bei Anlegen einer Spannung an die Anschlüsse 7 und 8 stromlos ist. Danach wird das Keramiksubstrat 5 in den Rahmen 11 eingeschoben und mit den Kanten 15 auf den Vorsprüngen 16 verklebt. Vor dem Aufbringen der Abdeckung 12 wird diese einseitig mit einer Edelmetallschicht, beispielsweise aus Gold, beschichtet, indem eine Schicht aus Goldresinat aufgedruckt wird, unter Freilassung des Fensters 13, die anschließend beim Einbrennen eine sehr gut haftende Goldschicht hinterläßt. Bei Verwendung von Glas liegt die Einbrenntemperatur bei etwa 600°C, wird eine Kapton-Folie verwendet, auf der die so hergestellte Goldschicht hervorragend haftet, so wird das Goldresinat bei 300 bis 350°C eingebrannt. Diese Abdeckung 12 mit der Goldschicht 14 wird dann auf den Rahmen 11 aufgeklebt derart, daß das Fenster 13 direkt über dem Widerstand 1 zu liegen kommt, wobei dieser Widerstand 1 vor dem Zusammenbau mit einer schwarzen Mattlackfarbe abgedeckt wurde. An den Anschlüssen 7 und 8 wird nun eine Brückenspannung von beispielsweise 12 V angelegt, während an den Anschlüssen 9 und 10 im Falle einer vorhandenen Wärmestrahlung ein elektrisches Signal in Form eines Potentials abgenommen werden kann, da sich der Widerstand 1 in Abhängigkeit von der Strahlungsstärke stärker ändert als der Widerstand 2, der durch die reflektierende Schicht 14 vor der Wärmestrahlung geschützt ist. Dadurch wird die Brücke verstimmt und es tritt an den Anschlüssen 9 und 10 das erwähnte Ausgangssignal auf, das ein Maß für die einfallende Strahlund darstellt. Dabei hat sich gezeigt, daß das Ausgandssignal in mV praktisch linear abhängig ist von der Bestrahlungsstärke, gemessen in W/m². Dieses Signal kann nun beispielsweise dazu benutzt werden, in einem Kraftfahrzeug bei Überschreiten einer bestimmten Strahlungsstärke eine Jalousie am Heckfenster zu betätigen ; natürlich kann ein solcher Wärmestrahlungssensor auch in die Regelung einer Klimaanlage eines Kraftfahrzeuges einbezogen werden.

## Ansprüche

1. Wärmestrahlungssensor mit zwei der Strahlung ausgesetzten, Widerstände einer Brückenschaltung bildenden Empfängerflächen, von denen die eine (1) bezüglich der Wärmestrahlung ein hohes Absorptionsvermögen durch Schwarzfärbung, die andere (2) ein geringes Absorptionsvermögen durch eine die Wärmestrahlung reflektierende Abdeckung aufweist, wobei ein Rahmen (11) eine in hohem Maße wärmestrahlungsdurchlässige Abdeckung (12) trägt, die ihrerseits bis auf ein Fenster (13) eine Schicht (14) aus einem die Wärmestrahlung in hohem Maße reflektierenden Material trägt, dadurch gekennzeichnet, daß die beiden Empfängerflächen (1) und (2) aus einem NTC-Widerstandsmaterial bestehen und zusammen mit zwei temperaturunabhängigen Cermet-Widerständen (3) und (4) in der Brückenschaltung zusammengefaßt sind, indem die vier Widerstände (1) bis (4) auf ein Keramiksubstrat (5) aufgebracht und mit Leiterbahnen (6) verbunden sind, die ihrerseits in Anschlüssen (7, 8, 9, 10) enden, wobei das Keramiksubstrat (5) in dem Rahmen (11) fixiert ist.

2. Wärmestrahlungssensor nach Anspruch 1, dadurch gekennzeichnet, daß die NTC-Widerstände (1, 2) einen Quadratwiderstand von 0,5 bis 500 kΩ ☐ bei Raumtemperatur und eine Regelkonstante B von ca. 2200 aufweist, während die Cermetwiderstände (3, 4) einen Quadratwiderstand von ebenfalls 0,5 bis 500 kΩ ☐ aufweisen.

3. Wärmestrahlundssensor nach Anspruch 1 oder 2, dadurch gekennzeichnet, daß die wärmestrahlungsdurchlässige Abdeckung (12) aus Glas oder einem Polyimid besteht.

4. Wärmestrahlungssensor nach Anspruch 1, dadurch gekennzeichnet, daß die wärmestrahlundsreflektierende Schicht (14) aus Gold oder Platin besteht und vorzugsweise auf der dem Keramiksubstrat (5) zugewandten Seite der Abdeckung (12) aufgebracht ist.

5. Wärmestrahlungssensor nach Anspruch 3 oder 4, dadurch gekennzeichnet, daß die Schicht (14) durch Aufdrucken einer Schicht aus Gold- oder Platinresinat und anschließendes Einbrennen bei ca. 600°C im Falle von Glas bzw. 300 bis 350°C im Falle von Polyimid hergestellt ist.

6. Wärmestrahlungssensor nach Anspruch 1, dadurch gekennzeichnet, daß das Keramiksubstrat (5) derart in dem Rahmen (11) fixiert ist, daß nur der Rand (15) des Substrates (5) auf einem entsprechenden Vorsprung (16) aufliegt.

7. Wärmestrahlundssensor nach Anspruch 1, dadurch gekennzeichnet, daß das Keramiksubstrat (5) und die Abdeckung (12) keinen unmittelbaren Kontakt haben.

## Claims

1. Thermal radiation sensor having two receiver surfaces, exposed to the radiation, which form resistors of a bridge circuit and of which the one (1) has, in relation to thermal radiation, a high absorbing capacity owing to black coloration, while the other (2) has a low absorbing capacity owing to a cover which reflects the thermal radiation, a frame (11) carrying a cover (12) which is substantially transparent to thermal radiation and which for its part carries, except for a window (13), a layer (14) composed of a material which substantially reflects the thermal radiation, characterized in that the two receiver surfaces (1) and (2) are composed of an NTC resistor material and are combined with two temperature-independent cermet-resistors (3) and (4) in the bridge circuit, the four resistors (1) to (4) being applied to a ceramic substrate (5) and connected with conductor strips (6) which for their part end in connections (7, 8, 9, 10), the ceramic substrate (5) being fixed in the frame (11).

2. Thermal radiation sensor according to Claim 1, characterized in that the NTC resistors (1, 2) have a square resistance of 0.5 to 500 kΩ □(sic) at room temperature and a control constant B of approximately 2200, while the cermet resistors (3, 4) have a square resistance of likewise 0.5 to 500 kΩ □(sic).

3. Thermal radiation sensor according to Claim 1 or 2, characterized in that the cover (12) which is transparent to thermal radiation is composed of glass or a polyamide.

4. Thermal radiation sensor according to Claim 1, characterized in that the layer (14) which reflects thermal radiation is composed of gold or platinum and is preferably applied to the side of the cover (12) facing the ceramic substrate (5).

5. Thermal radiation sensor according to Claim 3 or 4, characterized in that the layer (14) is produced by printing on a layer of gold or platinum resinate and then firing at approximately 600°C in the case of glass or 300 to 350°C in the case of polyimide.

6. Thermal radiation sensor according to Claim 1, characterized in that the ceramic substrate (5) is fixed in the frame (11) in a manner such that only the edge (15) of the substrate (5) rests on a matching projection (16).

7. Thermal radiation sensor according to Claim 1, characterized in that the ceramic substrate (5) and the cover (12) do not have any direct contact.

## Revendications

1. Capteur de rayonnement thermique pourvu de deux surfaces réceptrices exposées au rayonnement et constituant les résistances d'un montage en pont, dont l'une (1) présente une capacité élevée d'absorption du rayonnement thermique par suite de sa coloration en noir, et l'autre (2) une faible capacité d'absorption en raison d'un revêtement réfléchissant le rayonnement thermique, dont le cadre (11) porte un revêtement (12) perméable dans une grande mesure au rayonnement thermique, qui comporte pour sa part, à l'exception d'une fenêtre (13), une couche (13) d'une matière réfléchissant, dans une grande mesure, le rayonnement thermique, caractérisé en ce que les deux surfaces réceptrices (1 et 2) sont constituées dans une matrice de résistance NTC et sont réunies à deux résistances en Cermet indépendantes de la température dans le montage en pont, cependant que les quatre résistances (1) à (4) sont appliquées sur un substrat de céramique et reliées à des pistes conductrices (4) qui s'achèvent pour leur part avec les connexions (7, 8, 9, 10) et que le substrat de céramique (5) est fixé au cadre (11).

2. Capteur de rayonnement thermique selon la revendication 1, caractérisé en ce que les résistances NTC (1, 2) présentent une résistance carrée de 0,5 à 500 KΩ □à la température ambiante et une constante de réglage B d'environ 2200, tandis que les résistances en Cermet (3, 4) présentent une résistance carrée qui va également de 0,5 à 500 KΩ □.

3. Capteur de rayonnement thermique selon la revendication 1 ou 2, caractérisé en ce que le revêtement (12) perméable au rayonnement thermique est constitué par du verre ou par un polyimide.

4. Capteur de rayonnement thermique selon la revendication 1, caractérisé en ce que la couche (14) réfléchissant le rayonnement thermique est en or ou en platine et est appliquée, de préférence, sur la face du revêtement en regard du substrat de céramique.

5. Capteur de rayonnement thermique selon la revendication 3 ou 4, caractérisé en ce que la couche (14) est réalisée par impression d'une couche en résinate d'or ou de platine, suivie d'une cuisson à 600°C environ dans le cas du verre ou de 300° à 350°C dans le cas du polyimide.

6. Capteur de rayonnement thermique selon la revendication 1, caractérisé en ce que le substrat de céramique (5) est fixé dans le cadre (11), de telle sorte que seul le bord (15) du substrat (5) s'appuie sur une saillie correspondante.

7. Capteur de rayonnement thermique selon la revendication 1, caractérisé en ce que le substrat de céramique (5) et le revêtement (12) n'ont aucun contact direct.

# FIG. 1

# FIG. 2